# EUROPÄISCHE PATENTSCHRIFT

(11) **EP 3 676 122 B1**
(45) Veröffentlichungstag und Bekanntmachung des Hinweises auf die Patenterteilung: **23.06.2021**
(21) Anmeldenummer: 18746625.5
(22) Anmeldetag: 16.07.2018
(51) Int. Cl.: B60K 15/03, B60K 15/035, B60K 15/077

(54) **BETRIEBSFLÜSSIGKEITSBEHÄLTER MIT SCHOTTWÄNDEN ZUM AUSGLEICH VON BEFÜLLVOLUMINA BEI BEFÜLLVORGÄNGEN IN SCHRÄGLAGE**
WORKING FLUID CONTAINER WITH PARTITIONS FOR BALANCING FILLING VOLUMES DURING FILLING PROCESSES IN AN INCLINED POSITION
RÉCIPIENT DE LIQUIDE DE FONCTIONNEMENT COMPRENANT DES CLOISONS POUR LA COMPENSATION DE VOLUMES DE REMPLISSAGE LORS DE PROCESSUS DE REMPLISSAGE EN POSITION INCLINÉE

(30) Priorität: 31.08.2017 DE 102017120102
(43) Veröffentlichungstag der Anmeldung: 08.07.2020
(73) Patentinhaber: Kautex Textron GmbH & Co. KG, 53229 Bonn (DE)
(72) Erfinder: STRACK, Mario, 53127 Bonn (DE)
(74) Vertreter: Richly & Ritschel Patentanwälte PartG mbB
(86) Internationale Anmeldenummer: PCT/EP2018/069260
(87) Internationale Veröffentlichungsnummer: WO 2019/042651

(56) Entgegenhaltungen:
- WO-A1-2005/035289
- CN-A- 104 129 282
- US-A1- 2012 234 616

## Beschreibung

Die vorliegende Erfindung betrifft einen für ein Kraftfahrzeug vorgesehenen und geeigneten Betriebsflüssigkeitsbehälter mit Schottwänden zum Ausgleich von Befüllvolumina bei in Schräglage des Kraftfahrzeugs und somit in Schräglage des Betriebsflüssigkeitsbehälters durchgeführten Befüllvorgängen des Betriebsflüssigkeitsbehälters.

Im Folgenden wird auch auf als Kraftstoffbehälter bzw. als Kraftstofftanks ausgebildete Betriebsflüssigkeitsbehälter Bezug genommen. Betriebsflüssigkeitsbehälter im Sinne der Erfindung sind insbesondere aber nicht ausschließlich Kraftstoffbehälter (für Ottokraftstoff oder Dieselkraftstoff) für Kraftfahrzeuge, Harnstoffbehälter, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin können auch aus Metall gebildete Betriebsflüssigkeitsbehälter verwendet werden.

Aufgrund von begrenzten und beengten Platzverhältnisse in einem Kraftfahrzeug ist es häufig notwendig, dass Betriebsflüssigkeitsbehälter eine komplizierte und unregelmäßige Geometrie aufweisen, um den zur Verfügung stehenden Bauraum im Kraftfahrzeug effektiv auszunutzen. Ferner ist es aufgrund der komplizierten und unregelmäßigen Geometrie der Betriebsflüssigkeitsbehälter häufig notwendig, dass eine Betankungsentlüftungseinrichtung außermittig an einer Behälterdecke des Betriebsflüssigkeitsbehälters angeordnet ist. Die Betankungsentlüftungseinrichtung dient zum Ableiten von aus einem Betriebsflüssigkeitsbehälterinnenraum ausgetriebenen Gasen während eines Betankungsvorgangs. Die ausgetriebenen Gase können beispielsweise über ein Adsorptionsfilter an die Atmosphäre und/oder über eine Entlüftungsleitung an einen Einfüllstutzen des Betriebsflüssigkeitsbehälters abgeleitet werden, wo die Gase durch eine Absaugeinrichtung in einem in den Einfüllstutzen eingeführten Zapfventil abgesaugt/abgeleitet werden. Mittels der Betankungsentlüftungseinrichtung ist ferner ein Befüllstopp eines Befüllvorganges des Betriebsflüssigkeitsbehälters einleitbar/initiierbar, wenn eine Belüftungsöffnung der Betankungsentlüftungseinrichtung bedingt durch einen Betriebsflüssigkeitspegel im Betriebsflüssigkeitsbehälterinnenraum verschlossen wird.

Wenn ein Kraftfahrzeug auf einer horizontalen Ebene steht, dann weist das Kraftfahrzeug eine horizontale Ausrichtung auf. In Einbaulage eines Betriebsflüssigkeitsbehälters in einem horizontal ausgerichteten Kraftfahrzeug weist der Betriebsflüssigkeitsbehälter ebenfalls eine horizontale Ausrichtung auf. Wenn ein in Einbaulage horizontal ausgerichteter Betriebsflüssigkeitsbehälter mittels einer Befülleinrichtung, die beispielsweise als Zapfventil ausgebildet sein kann, befüllt wird, wird bei Erreichen eines Abschaltpegels von Betriebsflüssigkeit im Betriebsflüssigkeitsbehälterinnenraum ein Abschaltvorgang der Befülleinrichtung eingeleitet, so dass sich nach Beenden des Befüllvorganges ein Nennvolumen von Betriebsflüssigkeit im Betriebsflüssigkeitsbehälterinnenraum befindet.

Aufgrund einer komplizierten und/oder unregelmäßigen Geometrie des Betriebsflüssigkeitsbehälters und/oder aufgrund einer außermittigen Anordnung einer Betankungsentlüftungseinrichtung in der Behälterdecke des Betriebsflüssigkeitsbehälters befindet sich nach Beenden eines Befüllvorganges, wobei das Beenden des Befüllvorganges durch Verschließen der Belüftungsöffnung der Betankungsentlüftungseinrichtung initiiert ist, eines sich in Schräglage befindlichen Betriebsflüssigkeitsbehälters eine vom Nennvolumen unterschiedliche Menge von Betriebsflüssigkeit im Betriebsflüssigkeitsbehälterinnenraum.

Weiterhin besteht bei aus dem Stand der Technik bekannten Betriebsflüssigkeitsbehältern das Problem, dass bei unterschiedlichen Schräglagen mit unterschiedlichen Neigungswinkeln und/oder unterschiedlichen Neigungsorientierungen des Betriebsflüssigkeitsbehälters dieser nach Beenden eines Befüllvorganges, der durch Verschließen der Belüftungsöffnung der Betankungsentlüftungseinrichtung initiiert ist, stets unterschiedliche Füllvolumina aufweist. So ergibt sich beispielsweise bei aus dem Stand der Technik bekannten Betriebsflüssigkeitsbehältern das Problem, dass sich bei einem rechts abschüssig geparktem Kraftfahrzeug nach Beenden eines Befüllvorganges ein anderes Füllvolumen von Betriebsflüssigkeit im Betriebsflüssigkeitsbehälterinnenraum befindet als beim links abschüssig geparktem Kraftfahrzeug. Die Füllvolumina hängen somit von dem Neigungswinkel und der Neigungsorientierung des Betriebsflüssigkeitsbehälters während eines Befüllvorganges ab.

Die US 2012/234616 A1 offenbart einen Betriebsflüssigkeitsbehälter mit einer Betankungsentlüftungseinrichtung zum Entlüften eines Betriebsflüssigkeitsbehälterinnenraums während eines Betankungsvorganges.

Der vorliegenden Erfindung liegt die Aufgabe zugrunde, einen Betriebsflüssigkeitsbehälter bereitzustellen, der nach einem durch einen Verschluss der Belüftungsöffnung der Betankungsentlüftungseinrichtung initiierten Befüllstopp ein Füllvolumen aufweist, das eine kleinere Differenz zum Nennvolumen des Betriebsflüssigkeitsbehälters aufweist.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den abhängigen Ansprüchen beschrieben.

Im Genaueren wird die der vorliegenden Erfindung zugrundeliegende Aufgabe durch einen Betriebsflüssigkeitsbehälter für ein Kraftfahrzeug gelöst, der eine Betankungsentlüftungseinrichtung zum Entlüften eines Betriebsflüssigkeitsbehälterinnenraums während eines Betankungsvorganges aufweist, wobei der Betriebsflüssigkeitsbehälterinnenraum mittels der Betankungsentlüftungseinrichtung mit der Umgebung des Betriebsflüssigkeitsbehälters zumindest mittelbar in Fluidverbindung steht, wenn eine Belüftungsöffnung der Betankungsentlüftungseinrichtung nicht verschlossen ist, und wobei in Einbaulage und horizontaler Ausrichtung des Betriebsflüssigkeitsbehälters bei einem vorgegeben Nennvolumen von Betriebsflüssigkeit innerhalb des Betriebsflüssigkeitsbehälterinnenraums die Belüftungsöffnung der Betankungsentlüftungseinrichtung bedingt durch den Betriebsflüssigkeitspegel im Betriebsflüssigkeitsbehälterinnenraum verschlossen wird, so dass ein Gasaustausch zwischen dem Betriebsflüssigkeitsbehälterinnenraum und der Umgebung des Betriebsflüssigkeitsbehälters mittels der Betankungsentlüftungseinrichtung unterbunden ist, wodurch ein Befüllstopp eines Befüllvorganges des Betriebsflüssigkeitsbehälters initiiert wird. Der erfindungsgemäße Betriebsflüssigkeitsbehälter ist dadurch gekennzeichnet, dass dieser zumindest eine im Betriebsflüssigkeitsbehälterinnenraum angeordnete Schottwand aufweist, die mit einer Innenfläche einer Behälterdecke des Betriebsflüssigkeitsbehälters in Kontakt steht und sich in Richtung eines der Behälterdecke gegenüberliegenden Behälterbodens erstreckt. Dabei bildet die Schottwand zusammen mit der Behälterdecke einen im Wesentlichen gasundurchlässigen Luftraum, der von einem Entlüftungsraum, in dem die Betankungsentlüftungseinrichtung angeordnet ist, luftgetrennt ist, wenn ein Pegel der Betriebsflüssigkeit im Betriebsflüssigkeitsbehälterinnenraum so hoch ist, dass eine dem Behälterboden zugewandte Unterkante der Schottwand in die sich im Betriebsflüssigkeitsbehälterinnenraum befindliche Betriebsflüssigkeit eingetaucht ist. Die Schottwand ist derart dimensioniert und positioniert, dass unabhängig von einer beliebig orientierten Schräglage des Betriebsflüssigkeitsbehälters von bis zu 20° während eines Befüllvorganges bei einem durch den Betriebsflüssigkeitspegel initiierten Verschluss der Belüftungsöffnung ein Füllvolumen der sich im Betriebsflüssigkeitsbehälterinnenraum befindlichen Betriebsflüssigkeit zwischen 90% und 110% des Nennvolumens des Betriebsflüssigkeitsbehälters beträgt.

Der erfindungsgemäße Betriebsflüssigkeitsbehälter weist den Vorteil auf, dass der Betriebsflüssigkeitsbehälter nach einem durch einen Verschluss der Belüftungsöffnung der Betankungsentlüftungseinrichtung initiierten Befüllstopp eines bei Schräglage des Betriebsflüssigkeitsbehälters durchgeführten Befüllvorganges ein Füllvolumen aufweist, das eine kleinere Differenz zum Nennvolumen des Betriebsflüssigkeitsbehälters aufweist.

Die Bestimmung der Positionierung und Dimensionierung der zumindest einen Schottwand im Betriebsflüssigkeitsbehälterinnenraum wird vorzugsweise über ein Betankungssimulationsprogramm unter Berücksichtigung der Geometrie des Betriebsflüssigkeitsbehälters ermittelt. Beispielsweise erfolgt die Bestimmung der Positionierung und Dimensionierung der zumindest einen Schottwand im Betriebsflüssigkeitsbehälterinnenraum mittels einer Finite-Elemente-Methode unter Berücksichtigung der dreidimensionalen Geometrie des Betriebsflüssigkeitsbehälters.

Aufgrund von unterschiedlichsten Geometrien und Abmessungen von unterschiedlichen Betriebsflüssigkeitsbehältern und auch aufgrund unterschiedlicher Positionierungen von Betankungsentlüftungseinrichtungen in den Betriebsflüssigkeitsbehälterinnenräumen sind auch die Positionierungen und Dimensionierungen der Schottwand bzw. der Schottwände sehr unterschiedlich, die notwendig ist/sind zum Angleichen von Füllvolumina nach Beenden von Betankungsvorgängen in unterschiedlichen Schräglagen des Betriebsflüssigkeitsbehälters an die jeweiligen Nennvolumina der Betriebsflüssigkeitsbehälter. Erfindungsgemäß bestehen insofern keinerlei Beschränkungen hinsichtlich der Anzahl von Schottwänden, der Positionierung von Schottwänden, der Abmessungen der Schottwände und hinsichtlich der Geometrien der Schottwände im Betriebsflüssigkeitsbehälterinnenraum.

Vorzugsweise ist die Betankungsentlüftungseinrichtung innerhalb des Betriebsflüssigkeitsbehälterinnenraums angeordnet. Weiter vorzugsweise ist die Betankungsentlüftungseinrichtung außerhalb des Betriebsflüssigkeitsbehälterinnenraums angeordnet und mittels einer Belüftungsleitung mit dem Betriebsflüssigkeitsbehälterinnenraum fluidverbunden.

Die Fluidverbindung des Betriebsflüssigkeitsbehälterinnenraums mit der Umgebung des Betriebsflüssigkeitsbehälters ist vorzugsweise dadurch realisiert, dass die Betankungsentlüftungseinrichtung zumindest mittelbar mit der Atmosphäre fluidverbunden ist. Vorzugsweise ist die Betankungsentlüftungseinrichtung über ein Adsorptionsfilter, das beispielsweise als Aktivkohlefilter ausgebildet ist, mit der Atmosphäre fluidverbunden. Ferner kann die Fluidverbindung des Betriebsflüssigkeitsbehälterinnenraums mit der Umgebung des Betriebsflüssigkeitsbehälters ist dadurch realisiert sein, dass der Betriebsflüssigkeitsbehälterinnenraum mittels der Betankungsentlüftungseinrichtung mit einem Speichervolumen außerhalb des Betriebsflüssigkeitsbehälters fluidverbunden ist. Das Speichervolumen kann beispielsweise in einer Betankungsanlage oder einer Kruse-Flasche vorgesehen sein. Weiter vorzugsweise ist die Betankungsentlüftungseinrichtung über eine Entlüftungsleitung mit einem Einfüllstutzen und/oder einem Einfüllrohr des Betriebsflüssigkeitsbehälters fluidverbunden, so dass aus dem Betriebsflüssigkeitsbehälter entweichende Gase während eines Befüllvorganges durch eine Absaugeinrichtung in einem in den Einfüllstutzen eingeführten Zapfventil abgesaugt/abgeleitet werden können.

Unter einer horizontalen Ausrichtung des Betriebsflüssigkeitsbehälters in Einbaulage ist erfindungsgemäß eine Ausrichtung des Betriebsflüssigkeitsbehälters zu verstehen, wenn das Kraftfahrzeug, in dem der Betriebsflüssigkeitsbehälter eingebaut ist, auf einer horizontalen Ebene steht und daher selber eine horizontale Ausrichtung aufweist.

Wenn die Betankungsentlüftungseinrichtung als Tauchrohr ausgebildet ist, dann wird die Belüftungsöffnung des Tauchrohrs bei einem bestimmten Betriebsflüssigkeitspegel im Betriebsflüssigkeitsbehälterinnenraum direkt durch die Betriebsflüssigkeit, also durch den Betriebsflüssigkeitspegel im Betriebsflüssigkeitsbehälterinnenraum verschlossen.

Wenn die Betankungsentlüftungseinrichtung als Schwimmerventil ausgebildet ist, dann wird die Belüftungsöffnung des Schwimmerventils durch einen Schwimmer verschlossen, wenn die Betriebsflüssigkeitsmenge im Betriebsflüssigkeitsbehälterinnenraum dem Nennvolumen entspricht oder diesen übersteigt. Das Schwimmerventil wird auch als Betankungsentlüftungsventil bezeichnet. Der Schwimmer wird auch als Auftriebskörper bezeichnet.

Die zumindest eine Schottwand ist im Wesentlichen gas- und flüssigkeitsundurchlässig, so dass durch die Schottwand bzw. durch die Schottwände kein oder zumindest ein für einen Betankungsvorgang unwesentlichen Gasaustausch und kein Austausch von Betriebsflüssigkeit erfolgt.

Die Verbindung der Schottwand bzw. der Schottwände mit der Innenfläche der Behälterdecke ist dergestalt, dass durch diese Verbindung ebenfalls kein oder zumindest ein für einen Betankungsvorgang unwesentlicher Gas- und Flüssigkeitsaustausch möglich ist. Die Verbindung kann durch eine stoffschlüssige, formschlüssige und/oder kraftschlüssige Verbindung erfolgen. Insbesondere ist die zumindest eine Schottwand mit der Innenfläche der Behälterdecke verschweißt und/oder einstückig ausgebildet.

Der Luftraum wird durch die Schottwand, die Behälterdecke und durch die Oberfläche der Betriebsflüssigkeit gebildet.

Vorzugsweise ist die zumindest eine Schottwand bzw. sind die Schottwände derart dimensioniert und positioniert, dass unabhängig von einer Schräglage des Betriebsflüssigkeitsbehälters von bis zu 15°, vorzugsweise von bis zu 10°, weiter vorzugsweise von bis zu 5° während eines Befüllvorganges bei einem durch den Betriebsflüssigkeitspegel initiierten Verschluss der Belüftungsöffnung ein Füllvolumen der sich im Betriebsflüssigkeitsbehälterinnenraum befindlichen Betriebsflüssigkeit zwischen 90% und 110%, vorzugsweise zwischen 95% und 105% und weiter vorzugsweise zwischen 97% und 103% des Nennvolumens des Betriebsflüssigkeitsbehälters beträgt.

Die zumindest eine Schottwand wirkt vorzugsweise noch als Schwappschutzwand, die einer Schwappbewegung der Betriebsflüssigkeit beispielsweise während einer Fahrt des Kraftfahrzeugs entgegenwirkt.

Vorzugsweise ist der Betriebsflüssigkeitsbehälter derart ausgebildet, dass die zumindest eine Schottwand bzw. die Schottwände derart dimensioniert und positioniert ist/sind, dass unabhängig von einer Schräglage von bis zu 20° des Betriebsflüssigkeitsbehälters, die durch eine Neigung des Betriebsflüssigkeitsbehälters um eine parallel zu einer Längserstreckungsrichtung des Kraftfahrzeugs, in dem Betriebsflüssigkeitsbehälter eingebaut ist, orientierten Neigungsachse bewirkt wird, dass während eines Befüllvorganges bei einem durch den Betriebsflüssigkeitspegel initiierten Verschluss der Belüftungsöffnung das Füllvolumen der sich im Betriebsflüssigkeitsbehälterinnenraum befindlichen Betriebsflüssigkeit zwischen 90% und 110% des Nennvolumens des Betriebsflüssigkeitsbehälters beträgt.

Der entsprechend ausgebildete Betriebsflüssigkeitsbehälter trägt dem Umstand Rechnung, dass während eines Befüllvorganges das Kraftfahrzeug, in dem der Betriebsflüssigkeitsbehälter eingebaut ist, üblicherweise bezüglich der Längserstreckungsrichtung des Kraftfahrzeugs links- oder rechtsabschüssig steht. Die Ausgestaltung der Schottwand bzw. der Schottwände ist für einen entsprechend ausgebildeten Betriebsflüssigkeitsbehälter vereinfacht.

Vorzugsweise ist der Betriebsflüssigkeitsbehälter derart ausgebildet, dass die zumindest eine Schottwand entlang ihrer Längserstreckung zumindest eine Biegung aufweist.

Unter der Längserstreckung einer Schottwand ist die parallel zur Behälterdecke verlaufende Erstreckung der Schottwand zu verstehen. Eine Radialrichtung der Biegung weist folglich eine parallel zu einer horizontalen Ebene verlaufende Erstreckungskomponente auf. Bei horizontaler Ausrichtung des Betriebsflüssigkeitsbehälters weist die Radialrichtung der Biegung folglich eine horizontal verlaufende Erstreckungskomponente auf.

Der entsprechend ausgebildete Betriebsflüssigkeitsbehälter weist den Vorteil auf, dass die Positionierung der Schottwand bzw. der Schottwände im Betriebsflüssigkeitsbehälterinnenraum durch eine gebogene Ausgestaltung der Schottwand bzw. der Schottwände variabler ist, so dass auf eventuell im Betriebsflüssigkeitsbehälterinnenraum verbaute Einbauten verbessert Rücksicht genommen werden kann. Somit weist der entsprechend ausgebildete Betriebsflüssigkeitsbehälter den Vorteil auf, dass dessen Innenraum eine verbesserte Nutzbarkeit durch Einbauten hat. Ferner weist der entsprechend ausgebildete Betriebsflüssigkeitsbehälter den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist.

Vorzugsweise ist der Betriebsflüssigkeitsbehälter derart ausgebildet, dass die zumindest eine Schottwand entlang ihrer Längserstreckung eine Mehrzahl von Biegungen aufweist, so dass die zumindest eine Schottwand in sich geschlossen ist.

Bei dem entsprechend ausgebildeten Betriebsflüssigkeitsbehälter schließt die Schottwand folglich einen Winkel von 360° ein.

Der entsprechend ausgebildete Betriebsflüssigkeitsbehälter weist den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist.

Vorzugsweise ist der Betriebsflüssigkeitsbehälter derart ausgebildet, dass die zumindest eine Schottwand entlang ihrer Längserstreckung eine unterschiedliche Tiefenerstreckung aufweist, so dass die Unterkante der zumindest einen Schottwand entlang der Längserstreckung der Schottwand unterschiedliche Abstände zu einer horizontal durch die Belüftungsöffnung (31) verlaufende Ebene aufweist.

Unter einer horizontale Ebene ist eine Ebene zu verstehen, die eine Betriebsflüssigkeitsoberfläche bei einer horizontalen Ausrichtung des Betriebsflüssigkeitsbehälters einnimmt.

Die Tiefenerstreckung der Schottwand bzw. der Schottwände ist die Erstreckung der Schottwand bzw. der Schottwände in Richtung einer Verbindungslinie zwischen der Behälterdecke und dem Behälterboden.

Der entsprechend ausgebildete Betriebsflüssigkeitsbehälter weist den Vorteil auf, dass die Positionierung der Schottwand bzw. der Schottwände im Betriebsflüssigkeitsbehälterinnenraum variabler ist, so dass auf eventuell im Betriebsflüssigkeitsbehälterinnenraum verbaute Einbauten verbessert Rücksicht genommen werden kann. Somit weist der entsprechend ausgebildete Betriebsflüssigkeitsbehälter den Vorteil auf, dass dessen Innenraum eine verbesserte Nutzbarkeit durch Einbauten hat. Ferner weist der entsprechend ausgebildete Betriebsflüssigkeitsbehälter den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist.

Vorzugsweise ist der Betriebsflüssigkeitsbehälter derart ausgebildet, dass dieser eine im Betriebsflüssigkeitsbehälterinnenraum angeordnete Belüftungsleitung aufweist, mittels der der Luftraum mit dem Entlüftungsraum fluidverbunden ist, wobei die Belüftungsleitung durch die zumindest eine Schottwand hindurchgeführt ist oder unter der Schottwand verläuft.

Auch dieser entsprechend ausgebildete Betriebsflüssigkeitsbehälter weist den Vorteil auf, dass die Positionierung der Schottwand bzw. der Schottwände im Betriebsflüssigkeitsbehälterinnenraum variabler ist, so dass auf eventuell im Betriebsflüssigkeitsbehälterinnenraum verbaute Einbauten verbessert Rücksicht genommen werden kann. Somit weist der entsprechend ausgebildete Betriebsflüssigkeitsbehälter den Vorteil auf, dass dessen Innenraum eine verbesserte Nutzbarkeit durch Einbauten hat. Ferner weist der entsprechend ausgebildete Betriebsflüssigkeitsbehälter den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist. Ein weiterer Vorteil des entsprechend ausgebildeten Betriebsflüssigkeitsbehälters ist, dass dessen Betriebsflüssigkeitsbehälterinnenraum unabhängig von einer Schräglage des Betriebsflüssigkeitsbehälters verbessert nutzbar ist, da dessen Nennvolumen vergrößert ist.

Vorzugsweise ist der Betriebsflüssigkeitsbehälter derart ausgebildet, dass die zumindest eine Schottwand lediglich mit der Innenfläche der Behälterdecke luftdicht verbunden ist.

Ein entsprechend ausgebildeter Betriebsflüssigkeitsbehälter ist hinsichtlich seines Aufbaus vereinfacht, so dass auch dessen Herstellung vereinfacht ermöglicht ist. Dies gilt insbesondere für blasgeformte Betriebsflüssigkeitsbehälter, bei denen die zumindest eine Schottwand in einem separaten Herstellungsschritt in dem Betriebsflüssigkeitsbehälterinnenraum eingebaut wird.

Vorzugsweise ist der Betriebsflüssigkeitsbehälter derart ausgebildet, dass die zumindest eine Schottwand mit zumindest einer Innenfläche einer Seitenwand des Betriebsflüssigkeitsbehälters luftdicht verbunden ist.

Auch dieser entsprechend ausgebildete Betriebsflüssigkeitsbehälter weist den Vorteil auf, dass die Positionierung der Schottwand bzw. der Schottwände im Betriebsflüssigkeitsbehälterinnenraum variabler ist, so dass auf eventuell im Betriebsflüssigkeitsbehälterinnenraum verbaute Einbauten verbessert Rücksicht genommen werden kann. Somit weist der entsprechend ausgebildete Betriebsflüssigkeitsbehälter den Vorteil auf, dass dessen Innenraum eine verbesserte Nutzbarkeit durch Einbauten hat. Ferner weist der entsprechend ausgebildete Betriebsflüssigkeitsbehälter den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist.

Vorzugsweise ist der Betriebsflüssigkeitsbehälter derart ausgebildet, dass dieser zumindest zwei im Betriebsflüssigkeitsbehälterinnenraum angeordnete Schottwände aufweist, die mit der Innenfläche der Behälterdecke des Betriebsflüssigkeitsbehälters in Kontakt stehen und sich in Richtung des Behälterbodens erstrecken. Dabei bilden die Schottwände zusammen mit der Behälterdecke zwei Lufträume, die voneinander und von dem Entlüftungsraum luftgetrennt sind, wenn ein Pegel der Betriebsflüssigkeit im Betriebsflüssigkeitsbehälterinnenraum so hoch ist, dass dem Behälterboden zugewandte Unterkanten der Schottwände in die sich im Betriebsflüssigkeitsbehälterinnenraum befindliche Betriebsflüssigkeit eingetaucht sind. Die Schottwände sind derart dimensioniert und positioniert, dass unabhängig von einer beliebig orientierten Schräglage des Betriebsflüssigkeitsbehälters von bis zu 20° während eines Befüllvorganges bei einem durch den Betriebsflüssigkeitspegel initiierten Verschluss der Belüftungsöffnung ein Füllvolumen der sich im Betriebsflüssigkeitsbehälterinnenraum befindlichen Betriebsflüssigkeit zwischen 90% und 110% des Nennvolumens des Betriebsflüssigkeitsbehälters beträgt.

Insbesondere bei sehr komplex und unregelmäßig (zerklüftet) ausgebildeten Betriebsflüssigkeitsbehältern kann es notwendig sein, mehr als eine Schottwand im Betriebsflüssigkeitsbehälterinnenraum anzuordnen, um einen Ausgleich der Befüllvolumina unabhängig von einer Schräglage des Betriebsflüssigkeitsbehälters zu realisieren. Ferner weist der entsprechend ausgebildete Betriebsflüssigkeitsbehälter den Vorteil auf, dass die Positionierung der Schottwände im Betriebsflüssigkeitsbehälterinnenraum variabler ist, so dass auf eventuell im Betriebsflüssigkeitsbehälterinnenraum verbaute Einbauten verbessert Rücksicht genommen werden kann. Ferner weist der entsprechend ausgebildete Betriebsflüssigkeitsbehälter den Vorteil auf, dass das Füllvolumen des Betriebsflüssigkeitsbehälters nach Beenden eines Befüllvorganges in Schräglage des Betriebsflüssigkeitsbehälters eine nochmals verringerte Differenz zum Nennvolumen des Betriebsflüssigkeitsbehälters aufweist.

Vorzugsweise ist der Betriebsflüssigkeitsbehälter derart ausgebildet, dass die zumindest zwei Schottwände derart dimensioniert und positioniert sind, dass unabhängig von einer Schräglage von bis zu 20° des Betriebsflüssigkeitsbehälters, die durch eine Neigung des Betriebsflüssigkeitsbehälters um eine parallel zu einer Längserstreckungsrichtung des Kraftfahrzeugs, in dem der Betriebsflüssigkeitsbehälter eingebaut ist, bewirkt wird, dass während eines Befüllvorganges bei einem durch den Betriebsflüssigkeitspegel initiierten Verschluss der Belüftungsöffnung das Füllvolumen der sich im Betriebsflüssigkeitsbehälterinnenraum befindlichen Betriebsflüssigkeit zwischen 90% und 110% des Nennvolumens des Betriebsflüssigkeitsbehälters beträgt.

Der entsprechend ausgebildete Betriebsflüssigkeitsbehälter trägt dem Umstand Rechnung, dass während eines Befüllvorganges das Kraftfahrzeug, in dem der Betriebsflüssigkeitsbehälter eingebaut ist, üblicherweise bezüglich der Längserstreckungsrichtung des Kraftfahrzeugs links- oder rechtsabschüssig steht. Die Ausgestaltung der Schottwände ist für einen entsprechend ausgebildeten Betriebsflüssigkeitsbehälter vereinfacht.

Vorzugsweise ist der Betriebsflüssigkeitsbehälter derart ausgebildet, dass die Schottwände unterschiedliche Tiefenerstreckungen aufweisen, so dass eine erste Unterkante einer ersten Schottwand einen anderen Abstand zu einer horizontal durch die Belüftungsöffnung verlaufende Ebene aufweist als eine zweite Unterkante einer zweiten Schottwand.

Weiter vorzugsweise ist der Betriebsflüssigkeitsbehälter derart ausgebildet, dass die erste Schottwand zur Betankungsentlüftungseinrichtung einen ersten Abstand und eine erste Tiefenerstreckung und die zweite Schottwand zur Betankungsentlüftungseinrichtung einen zweiten Abstand und eine zweite Tiefenerstreckung aufweisen, wobei der erste Abstand kleiner als der zweite Abstand ist, und wobei die erste Tiefenerstreckung kleiner als die zweite Tiefenerstreckung ist.

Folglich wächst mit zunehmendem Abstand einer der zumindest zwei Schottwände zur Betankungsentlüftungseinrichtung die Tiefenerstreckung der entsprechenden Schottwand.

Vorzugsweise ist der Betriebsflüssigkeitsbehälter derart ausgebildet, dass die Betankungsentlüftungseinrichtung ein Tauchrohr aufweist, dessen Belüftungsöffnung durch die sich im Betriebsflüssigkeitsbehälterinnenraum befindliche Betriebsflüssigkeit verschlossen wird, wenn deren Volumen das Nennvolumen erreicht oder dieses übersteigt.

Ein entsprechend ausgebildeter Betriebsflüssigkeitsbehälter ist hinsichtlich seines Aufbaus besonders einfach, so dass auch dessen Herstellungskosten reduziert sind.

Vorzugsweise ist der Betriebsflüssigkeitsbehälter derart ausgebildet, dass die Betankungsentlüftungseinrichtung ein Schwimmerventil aufweist, dessen Belüftungsöffnung durch einen Ventilkörper verschlossen wird, wenn ein Volumen der sich im Betriebsflüssigkeitsbehälterinnenraum befindliche Betriebsflüssigkeit dem Nennvolumen entspricht oder dieses übersteigt. Der entsprechend ausgebildete Betriebsflüssigkeitsbehälter weist eine reduzierte Neigung zum Spitback und Splashback auf, bei denen beim Befüllstopp des Betriebsflüssigkeitsbehälters Betriebsflüssigkeit aus dem Einfüllrohr bzw. aus dem Einfüllstutzen spritzt.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Querschnittsdarstellung eines aus dem Stand der Technik bekannten Betriebsflüssigkeitsbehälters;
- Figur 2:: eine schematische Querschnittsdarstellung eines Betriebsflüssigkeitsbehälters gemäß der vorliegenden Erfindung;
- Figur 3:: eine räumliche Ansicht einer Oberschale eines Betriebsflüssigkeitsbehälters gemäß einer weiteren Ausführungsform der vorliegenden Erfindung von schräg unten, so dass der Innenaufbau der Oberschale sichtbar ist;
- Figur 4A:: eine schematische Querschnittsdarstellung eines Betriebsflüssigkeitsbehälters gemäß einer weiteren Ausführungsform der vorliegenden Erfindung;
- Figur 4B:: eine schematische Querschnittsdarstellung des in Figur 4A dargestellten Betriebsflüssigkeitsbehälters mit einer eine andere Tiefenerstreckung aufweisenden zweiten Schottwand;
- Figur 4C:: eine schematische Querschnittsdarstellung des in Figur 4B dargestellten Betriebsflüssigkeitsbehälters mit einer eine andere Tiefenerstreckung aufweisenden zweiten Schottwand;
- Figur 5A:: eine räumliche Ansicht einer Oberschale eines Betriebsflüssigkeitsbehälters gemäß einer nochmals weiteren Ausführungsform der vorliegenden Erfindung von schräg unten, so dass der Innenaufbau der Oberschale sichtbar ist;
- Figur 5B:: eine schematische Querschnittsdarstellung eines Betriebsflüssigkeitsbehälters, der eine in Figur 5A dargestellte Oberschale aufweist, wobei ein Verlauf einer Oberfläche von sich im Betriebsflüssigkeitsbehälterinnenraum befindlichen Betriebsflüssigkeit bei dem in Einbaulage horizontal ausgerichteten Betriebsflüssigkeitsbehälter dargestellt ist;
- Figur 5C:: eine schematische Querschnittsdarstellung des in Figur 5B dargestellten Betriebsflüssigkeitsbehälters, wobei ein Verlauf einer Oberfläche von sich im Betriebsflüssigkeitsbehälterinnenraum befindlichen Betriebsflüssigkeit bei dem in Einbaulage links abschüssig ausgerichteten Betriebsflüssigkeitsbehälter dargestellt ist;
- Figur 5D:: eine schematische Querschnittsdarstellung des in Figur 5C dargestellten Betriebsflüssigkeitsbehälters, wobei ein Verlauf einer Oberfläche von sich im Betriebsflüssigkeitsbehälterinnenraum befindlichen Betriebsflüssigkeit bei dem in Einbaulage links abschüssig ausgerichteten Betriebsflüssigkeitsbehälter dargestellt ist, wobei die Schräglage kleiner ist als bei dem in Figur 5C dargestellten Betriebsflüssigkeitsbehälter;
- Figur 5E:: eine schematische Querschnittsdarstellung des in Figur 5B dargestellten Betriebsflüssigkeitsbehälters, wobei ein Verlauf einer Oberfläche von sich im Betriebsflüssigkeitsbehälterinnenraum befindlichen Betriebsflüssigkeit bei dem in Einbaulage rechts abschüssig ausgerichteten Betriebsflüssigkeitsbehälter dargestellt ist;
- Figur 6:: eine schematische Querschnittsdarstellung eines Betriebsflüssigkeitsbehälters gemäß einer weiteren Ausführungsform der vorliegenden Erfindung; und
- Figur 7:: eine schematische Querschnittsdarstellung eines Betriebsflüssigkeitsbehälters gemäß einer weiteren Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

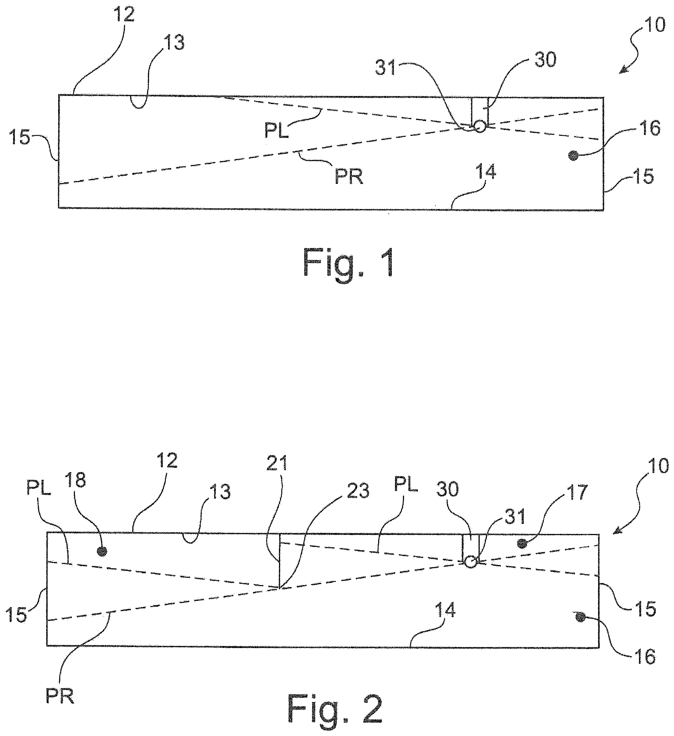

Figur 1 zeigt einen aus dem Stand der Technik bekannten Betriebsflüssigkeitsbehälter 10 in schematischer und sehr vereinfachter Querschnittsdarstellung. Der Betriebsflüssigkeitsbehälter 10 weist eine Behälterdecke 12, einen der Behälterdecke 12 gegenüberliegenden Behälterboden 14 und umlaufende jeweils mit der Behälterdecke 12 und dem Behälterboden 14 verbundene Seitenwände 15 auf, so dass ein Betriebsflüssigkeitsbehälterinnenraum 16 gebildet bzw. definiert ist. Innerhalb des Betriebsflüssigkeitsbehälterinnenraums 16 ist eine Betankungsentlüftungseinrichtung 30 angeordnet, die eine Belüftungsöffnung 31 aufweist. Mittels der Betankungsentlüftungseinrichtung 30 wird bei einem Befüllvorgang des Betriebsflüssigkeitsbehälters 10 aus dem Betriebsflüssigkeitsbehälterinnenraum 16 verdrängtes Gas abgeleitet. Sobald die Belüftungsöffnung 31 bedingt durch den einen Betriebsflüssigkeitspegel im Betriebsflüssigkeitsbehälterinnenraum 16 verschlossen wird, ist eine Entlüftung des Betriebsflüssigkeitsbehälterinnenraums 16 durch die Betankungsentlüftungseinrichtung 30 unterbunden. Durch einen entsprechenden Verschluss der Belüftungsöffnung 31 wird ein Befüllstopp eines Befüllvorganges eingeleitet.

Der Betriebsflüssigkeitsbehälter 10 weist ferner ein in Figur 1 nicht dargestelltes und in den Betriebsflüssigkeitsbehälterinnenraum 16 mündendes Einfüllrohr auf, über das Betriebsflüssigkeit in den Betriebsflüssigkeitsbehälterinnenraum 16 einfüllbar ist. Ferner weist der Betriebsflüssigkeitsbehälter eine in Figur 1 nicht dargestellte Entlüftungsleitung auf, über die die Betankungsentlüftungseinrichtung 30 mit der Atmosphäre zumindest mittelbar verbunden ist.

Wenn der Betriebsflüssigkeitsbehälter 10 in Einbaulage eine in Figur 1 nicht dargestellte horizontale Ausrichtung aufweist, wird bei einem vorgegeben Nennvolumen von Betriebsflüssigkeit innerhalb des Betriebsflüssigkeitsbehälterinnenraums 16 die Belüftungsöffnung 31 der Betankungsentlüftungseinrichtung 30 bedingt durch den Betriebsflüssigkeitspegel im Betriebsflüssigkeitsbehälterinnenraum 16 verschlossen, so dass der Betriebsflüssigkeitsbehälterinnenraum 16 nicht mehr mittels der Betankungsentlüftungseinrichtung 30 mit der Atmosphäre fluidverbunden ist.

In der schematischen Querschnittsdarstellung gemäß Figur 1 sind zwei Betriebsflüssigkeitspegel PL und PR mit gestrichelten Linien dargestellt. Ein Betriebsflüssigkeitspegel PL, der auch als Betriebsflüssigkeitsoberfläche PL bezeichnet werden kann, stellt den Verlauf der Betriebsflüssigkeitsoberfläche innerhalb des Betriebsflüssigkeitsbehälterinnenraums 16 dar, wenn der Betriebsflüssigkeitsbehälter bei der Darstellung gemäß Figur 1 eine nach links abfallende Neigung aufweist. Es ist ersichtlich, dass der Betriebsflüssigkeitspegel PL durch die Positionierung der Belüftungsöffnung 31 im Betriebsflüssigkeitsbehälterinnenraum 16 und durch den Neigungswinkel des Betriebsflüssigkeitsbehälters 10 bestimmt ist. Aus Figur 1 ist ersichtlich, dass bei Erreichen des Betriebsflüssigkeitspegel PL ein Luftraum oberhalb des Betriebsflüssigkeitspegel PL verbleibt, der nicht von der Betriebsflüssigkeit eingenommen wird.

Ein Betriebsflüssigkeitspegel PR, der auch als Betriebsflüssigkeitsoberfläche PR bezeichnet werden kann, stellt den Verlauf der Betriebsflüssigkeitsoberfläche innerhalb des Betriebsflüssigkeitsbehälterinnenraums 16 dar, wenn der Betriebsflüssigkeitsbehälter bei der Darstellung gemäß Figur 1 eine nach rechts abfallende Neigung aufweist. Aus Figur 1 ist ersichtlich, dass bei Erreichen des Betriebsflüssigkeitspegel PR ein Luftraum oberhalb des Betriebsflüssigkeitspegel PR verbleibt, der nicht von der Betriebsflüssigkeit eingenommen wird.

Aufgrund der außermittigen Positionierung der Betankungsentlüftungseinrichtung 30 in der Behälterdecke 12 ist der Luftraum oberhalb des Betriebsflüssigkeitspegel PL bei einem Betriebsflüssigkeitsbehälter 10, der eine nach links abfallende Neigung aufweist, kleiner als der Luftraum oberhalb des Betriebsflüssigkeitspegels PR bei dem Betriebsflüssigkeitsbehälter 10, der eine nach rechts abfallende Neigung aufweist. Daher unterscheiden sich die Füllvolumina des Betriebsflüssigkeitsbehälters 10 nach einem durch den Betriebsflüssigkeitspegel im Betriebsflüssigkeitsbehälterinnenraum 16 initiierten Befüllstopp bei unterschiedlichen Schräglagen des Betriebsflüssigkeitsbehälters 10 während eines Befüllvorganges voneinander und auch von dem Nennvolumen des Betriebsflüssigkeitsbehälters 10.

Figur 2 zeigt einen erfindungsgemäßen Betriebsflüssigkeitsbehälter 10 in schematischer und sehr vereinfachter Querschnittsdarstellung. Der erfindungsgemäße Betriebsflüssigkeitsbehälter 10 unterscheidet sich von dem in Figur 1 dargestellten Betriebsflüssigkeitsbehälter 10 dadurch, dass der erfindungsgemäße Betriebsflüssigkeitsbehälter 10 eine im Betriebsflüssigkeitsbehälterinnenraum 16 angeordnete Schottwand 21 aufweist. Die Schottwand 21 steht mit einer Innenfläche 13 der Behälterdecke 12 des Betriebsflüssigkeitsbehälters 10 in Kontakt und erstreckt sich in Richtung des Behälterbodens 14. Die Schottwand 21 ist gas- und flüssigkeitsundurchlässig, so dass durch die Schottwand 21 kein Gasaustausch und auch kein Austausch von Betriebsflüssigkeit erfolgt. Die Verbindung der Schottwand 21 mit der Innenfläche 13 der Behälterdecke 12 ist dergestalt, dass durch diese Verbindung ebenfalls kein Gas- und Flüssigkeitsaustausch möglich ist. Die Verbindung kann durch eine stoffschlüssige, formschlüssige und/oder kraftschlüssige Verbindung erfolgen. Insbesondere ist die Schottwand 21 mit der Innenfläche 13 der Behälterdecke 12 verschweißt und/oder einstückig ausgebildet. Vorzugsweise ist die Schottwand aus dem gleichen Material wie die Behälterdecke 12. Die Schottwand 21 kann ferner mit den Seitenwänden 15 des Betriebsflüssigkeitsbehälters 10 verbunden sein, die in der Darstellung von Figur 2 vor oder hinter der Zeichenebene liegen.

Somit bildet die Schottwand 21 zusammen mit der Behälterdecke 12 und gegebenenfalls mit den Seitenwänden 15 einen gasundurchlässigen Luftraum 18, der von einem Entlüftungsraum 17, in dem die Betankungsentlüftungseinrichtung 30 angeordnet ist, luftgetrennt ist. Der gasundurchlässige Luftraum 18 ist nach unten durch den Betriebsflüssigkeitspegel PL oder PR begrenzt, wenn der Betriebsflüssigkeitspegel PL, PR der Betriebsflüssigkeit im Betriebsflüssigkeitsbehälterinnenraum 16 so hoch ist, dass eine dem Behälterboden 14 zugewandte Unterkante 23 der Schottwand 21 in die sich im Betriebsflüssigkeitsbehälterinnenraum 16 befindliche Betriebsflüssigkeit eingetaucht ist.

Aus Figur 2 ist ersichtlich, dass bei einer Schräglage des Betriebsflüssigkeitsbehälters 10, in der dieser eine in der Darstellung gemäß Figur 2 eine nach links abfallende Neigung aufweist, der Luftraum 18 oberhalb des Betriebsflüssigkeitspegels PL im Vergleich zum Luftraum oberhalb des Betriebsflüssigkeitspegels PL in dem in Figur 1 dargestellten und eine entsprechende Schräglage aufweisende Betriebsflüssigkeitsbehälter 10 vergrößert ist. Daher wird bei dem erfindungsgemäßen Betriebsflüssigkeitsbehälter 10 durch Bereitstellen der Schottwand 21 der Luftraum 18 oberhalb des Betriebsflüssigkeitspegels PL dem Luftraum 18 oberhalb des Betriebsflüssigkeitspegels PR, der sich bei eine gemäß Darstellung von Figur 2 nach rechts abfallende Neigung aufweisenden Betriebsflüssigkeitsbehälter 10 einstellt, angeglichen.

Somit ist die Schottwand 21 derart dimensioniert und positioniert, dass unabhängig von einer Schräglage des Betriebsflüssigkeitsbehälters 10 in einem vorgegebenen Winkelbereich während eines Befüllvorganges bei einem durch den Betriebsflüssigkeitspegel PL, PR initiierten Verschluss der Belüftungsöffnung 31 ein Füllvolumen der sich im Betriebsflüssigkeitsbehälterinnenraum 16 befindlichen Betriebsflüssigkeit dem Nennvolumen des Betriebsflüssigkeitsbehälters 10 angenähert ist.

Im Ergebnis weist der erfindungsgemäße Betriebsflüssigkeitsbehälter 10 nach einem durch einen Verschluss der Belüftungsöffnung 31 der Betankungsentlüftungseinrichtung 30 initiierten Befüllstopp eines bei Schräglage des Betriebsflüssigkeitsbehälters 10 durchgeführten Befüllvorganges ein Füllvolumen auf, das eine kleinere Differenz zum Nennvolumen des Betriebsflüssigkeitsbehälters 10 aufweist. Die Bestimmung der Positionierung und Dimensionierung der zumindest einen Schottwand 21 im Betriebsflüssigkeitsbehälterinnenraum 16 wird vorzugsweise über eine Finite-Elemente-Methode unter Berücksichtigung der dreidimensionalen Geometrie des Betriebsflüssigkeitsbehälters 10 ermittelt.

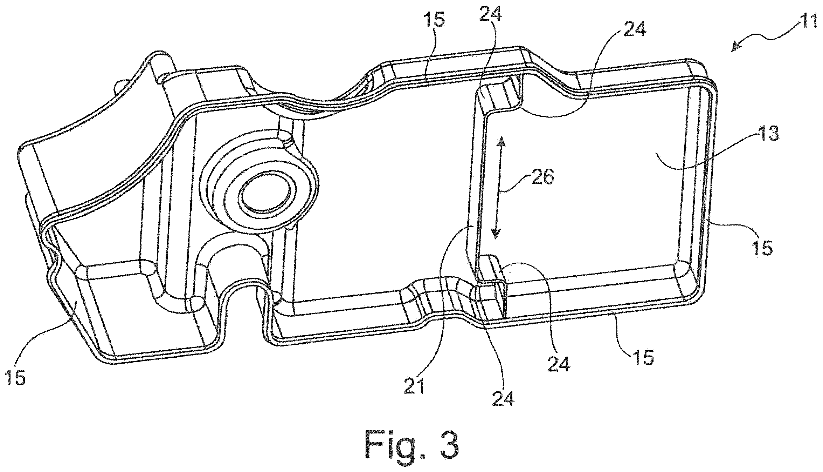

Figur 3 zeigt eine räumliche Ansicht einer Oberschale 11 eines Betriebsflüssigkeitsbehälters 10 gemäß einer weiteren Ausführungsform der vorliegenden Erfindung von schräg unten, so dass der Innenaufbau der Oberschale 11 sichtbar ist. Es ist ersichtlich, dass die Schottwand 21 entlang ihrer Längserstreckung 26 mehrere Biegungen 24 aufweist. Unter der Längserstreckung 26 der Schottwand 21 ist die parallel zur Behälterdecke 12 verlaufende Erstreckung der Schottwand 21 zu verstehen. Somit weisen die Radialrichtung der Biegungen 24 folglich eine parallel zur Behälterdecke 12 verlaufende Erstreckungskomponente auf. Bei horizontaler Ausrichtung des Betriebsflüssigkeitsbehälters 10 weist die Radialrichtung der Biegung folglich eine horizontal verlaufende Erstreckungskomponente auf.

Durch eine entsprechend ausgebildete Schottwand 21 ist deren Positionierung im Betriebsflüssigkeitsbehälterinnenraum 16 variabler, so dass auf eventuell im Betriebsflüssigkeitsbehälterinnenraum 16 verbaute Einbauten verbessert Rücksicht genommen werden kann. Der entsprechend ausgebildete Betriebsflüssigkeitsbehälter 10 weist ferner den Vorteil auf, dass das Füllvolumen des Betriebsflüssigkeitsbehälters 10 nach Beenden eines Befüllvorganges in einer Schräglage mit einer beliebigen Neigungsorientierung des Betriebsflüssigkeitsbehälters 10 eine nochmals verringerte Differenz zum Nennvolumen des Betriebsflüssigkeitsbehälters 10 aufweist.

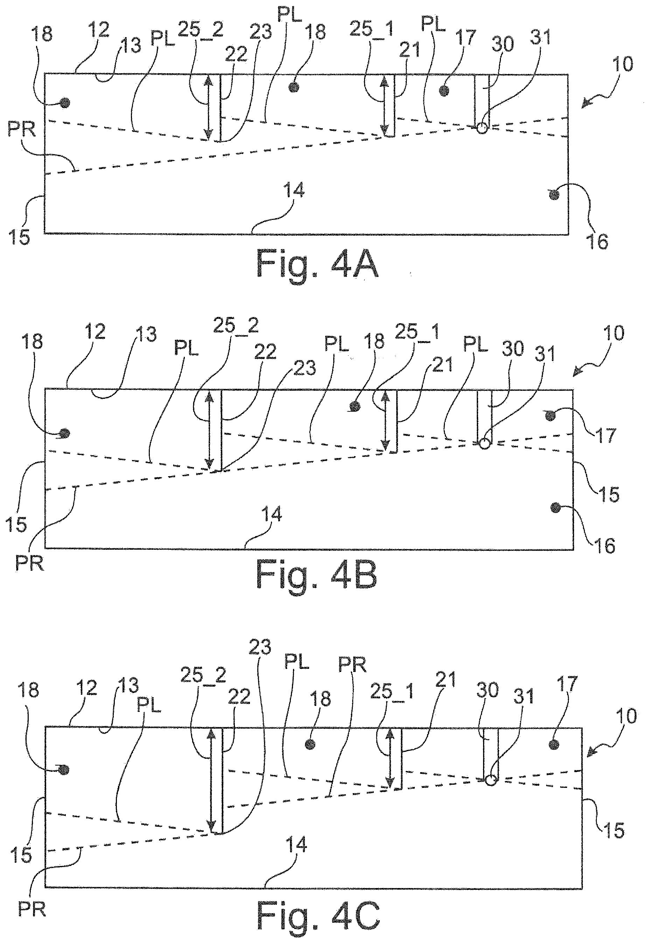

In den Figuren 4A, 4B und 4C sind jeweils in schematischer Querschnittsdarstellung Betriebsflüssigkeitsbehälter 10 gemäß weiterer Ausführungsformen der vorliegenden Erfindung dargestellt. Die in den Figuren 4A, 4B und 4C dargestellten Betriebsflüssigkeitsbehälter 10 weisen jeweils zwei im Betriebsflüssigkeitsbehälterinnenraum 16 angeordnete Schottwände 21, 22 auf, die mit der Innenfläche 13 der Behälterdecke 12 des Betriebsflüssigkeitsbehälters 10 in Kontakt stehen und sich in Richtung des Behälterbodens 14 erstrecken. Dabei bilden die Schottwände 21, 22 zusammen mit der Behälterdecke 12 zwei Lufträume 18, die voneinander und von dem Entlüftungsraum 17 luftgetrennt sind, wenn der Pegel der Betriebsflüssigkeit im Betriebsflüssigkeitsbehälterinnenraum 16 so hoch ist, dass die dem Behälterboden 14 zugewandte Unterkanten 23 der Schottwände 21, 22 in die sich im Betriebsflüssigkeitsbehälterinnenraum 16 befindliche Betriebsflüssigkeit eingetaucht sind. Die jeweiligen ersten Schottwände 21 weisen eine Tiefenerstreckung 25_1 auf, und die jeweiligen zweiten Schottwände 22 weisen eine zweite Tiefenerstreckung 25_2 auf. Dabei weisen die jeweiligen ersten Schottwände 21 einen ersten Abstand zur Betankungsentlüftungseinrichtung 30 auf, und die jeweiligen zweiten Schottwände 22 weisen einen zweiten Abstand zur Betankungsentlüftungseinrichtung 30 auf, wobei der erste Abstand kleiner als der zweite Abstand ist.

Bei dem in Figur 4A dargestellten Betriebsflüssigkeitsbehälter 10 ist die erste Tiefenerstreckung 25_1 der ersten Schottwand 21 gleich der zweiten Tiefenerstreckung 25_2 der zweiten Schottwand 22.

Den in den Figuren 4B und 4C dargestellten Betriebsflüssigkeitsbehältern 10 ist gemein, dass die zwei Schottwände 21, 22 unterschiedliche Tiefenerstreckungen 25_1 und 25_2 aufweisen, so dass eine erste Unterkante 23 einer ersten Schottwand 21 einen anderen Abstand zur Behälterdecke 12 aufweist als eine zweite Unterkante 23 einer zweiten Schottwand 22.

Bei dem in Figur 4B dargestellten Betriebsflüssigkeitsbehälter 10 ist zweite Tiefenerstreckung 25_2 der zweiten Schottwand 22 größer als die erste Tiefenerstreckung 25 1 der ersten Schottwand 21. Es ist ersichtlich, dass durch eine entsprechende Ausgestaltung der zweiten Schottwand 22 der Luftraum 18 oberhalb des Betriebsflüssigkeitspegels PL vergrößert wird.

Bei dem in Figur 4C dargestellten Betriebsflüssigkeitsbehälter 10 ist die zweite Tiefenerstreckung 25_2 der zweiten Schottwand 22 im Vergleich zu der in Figur 4B dargestellten nochmals vergrößert. Durch eine entsprechende Ausgestaltung der zweiten Schottwand 22 ist der Luftraum 18 oberhalb des Betriebsflüssigkeitspegels PL nochmals vergrößert.

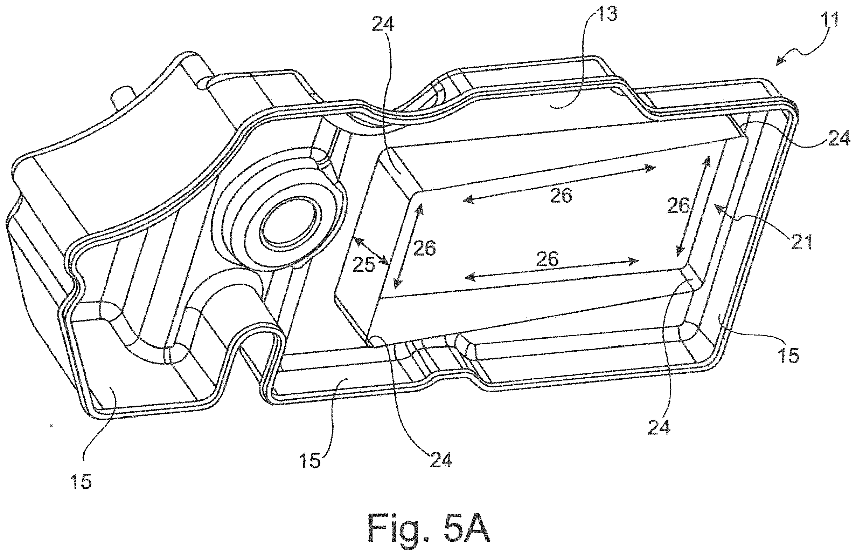

Figur 5A zeigt eine räumliche Ansicht einer Oberschale 11 eines Betriebsflüssigkeitsbehälters 10 gemäß einer weiteren Ausführungsform der vorliegenden Erfindung von schräg unten, so dass der Innenaufbau der Oberschale 11 sichtbar ist. Es ist ersichtlich, dass die Schottwand 21 entlang ihrer Längserstreckung 26 mehrere Biegungen 24 aufweist, so dass die Schottwand 21 in sich geschlossen ist. Dabei weist die Schottwand 21 entlang ihrer Längserstreckung 26 unterschiedliche Tiefenerstreckungen 25 auf, so dass die Unterkante 23 der Schottwand 21, 22 entlang der Längserstreckung 26 der Schottwand 21 unterschiedliche Abstände zur Behälterdecke 12 aufweist.

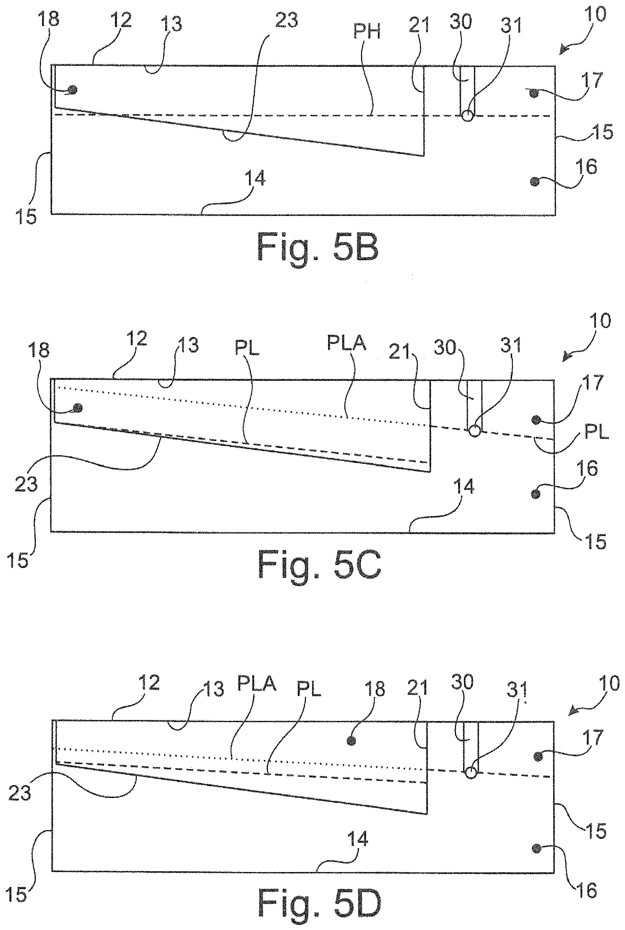

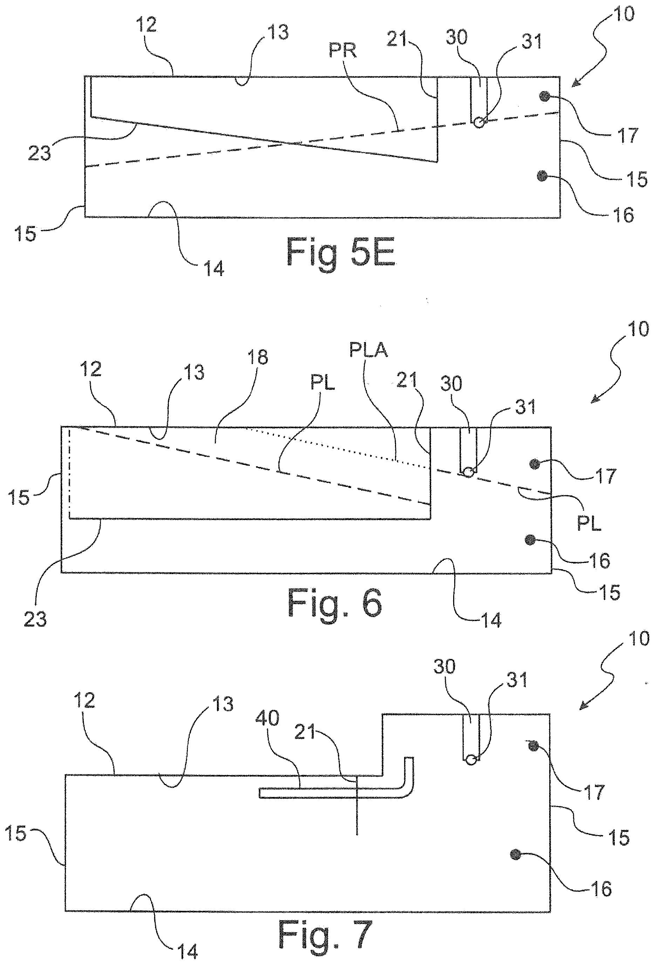

In den Figuren 5B, 5C, 5D und 5E ist der in Figur 5A dargestellte Betriebsflüssigkeitsbehälter 10 in stark vereinfachter schematischer Querschnittsdarstellung bei unterschiedlichen Schräglagen dargestellt.

In Figur 5B ist der Betriebsflüssigkeitsbehälter 10 in horizontaler Ausrichtung dargestellt, so dass die Betriebsflüssigkeitsoberfläche PH im Betriebsflüssigkeitsbehälter 10 parallel zum Behälterboden 14 verläuft. Es ist ersichtlich, dass die Schottwand 21 dann keinen Einfluss auf den Luftraum oberhalb der Betriebsflüssigkeitsoberfläche PH hat.

In den Figuren 5C und 5D weist der Betriebsflüssigkeitsbehälter 10 eine Schräglage auf, bei dem in der Darstellung gemäß der Figuren 5C und 5D der Betriebsflüssigkeitsbehälter nach links geneigt ist. Dabei weist der in Figur 5C dargestellte Betriebsflüssigkeitsbehälter 10 eine größere Neigung als der in Figur 5D dargestellte Betriebsflüssigkeitsbehälter 10 auf. Es ist ersichtlich, dass die Betriebsflüssigkeitsoberfläche PLA außerhalb der Schottwand 21 unterschiedlich zu der Betriebsflüssigkeitsoberfläche PL innerhalb der Schottwand 21 verläuft.

In Figur 5E weist der Betriebsflüssigkeitsbehälter 10 eine Schräglage auf, bei dem in der Darstellung gemäß der Figur 5E der Betriebsflüssigkeitsbehälter 10 nach rechts geneigt ist.

In Figur 6 ist ein Betriebsflüssigkeitsbehälter 10 gemäß einer weiteren Ausführungsform in stark vereinfachter Querschnittsdarstellung gezeigt. Es ist ersichtlich, dass die Schottwand 21 nicht geschlossen ausgebildet ist. Ferner ist ersichtlich, dass die Schottwand 21 entlang ihrer Längserstreckung eine gleichbleibende Tiefenerstreckung aufweist. In der Darstellung gemäß Figur 6 wiest der Betriebsflüssigkeitsbehälter 10 eine Schräglage auf, bei der dieser nach links geneigt ist. Es ist ersichtlich, dass die nicht geschlossene Schottwand 21 in der gezeigten Schräglage mit der Behälterdecke 12 einen geschlossenen Luftraum bildet, so dass die Betriebsflüssigkeitsoberfläche PLA außerhalb der Schottwand 21 unterschiedlich zu der Betriebsflüssigkeitsoberfläche PL innerhalb der Schottwand 21 verläuft.

In Figur 7 ist ein Betriebsflüssigkeitsbehälter 10 gemäß einer weiteren Ausführungsform in stark vereinfachter Querschnittsdarstellung gezeigt. Der Betriebsflüssigkeitsbehälter 10 weist eine im Betriebsflüssigkeitsbehälterinnenraum 16 angeordnete Belüftungsleitung 40 auf, mittels der der Luftraum 18 mit dem Entlüftungsraum 17 fluidverbunden ist, wobei die Belüftungsleitung 40 durch die Schottwand 21 hindurchgeführt ist.

### Bezugszeichenliste

- 10: Betriebsflüssigkeitsbehälter
- 11: Betriebsflüssigkeitsbehälteroberschale
- 12: Behälterdecke (des Betriebsflüssigkeitsbehälters)
- 13: Innenfläche (der Behälterdecke)
- 14: Behälterboden (des Betriebsflüssigkeitsbehälters)
- 15: Seitenwand (des Betriebsflüssigkeitsbehälters)
- 16: Betriebsflüssigkeitsbehälterinnenraum
- 17: Entlüftungsraum
- 18: Luftraum
- 21: (erste) Schottwand
- 22: (zweite) Schottwand
- 23: Unterkante (der Schottwand)
- 24: Biegung (der Schottwand)
- 25: Tiefenerstreckung (der Schottwand)
- 25_1: erste Tiefenerstreckung
- 25_2: zweite Tiefenerstreckung
- 26: Längserstreckung (der Schottwand)
- 30: Betankungsentlüftungseinrichtung / Schwimmerventil / Tauchrohr
- 31: Belüftungsöffnung (der Betankungsentlüftungseinrichtung)
- 40: Belüftungsleitung
- PH: Betriebsflüssigkeitspegel / Betriebsflüssigkeitsoberfläche (bei einer horizontalen Ausrichtung des Betriebsflüssigkeitsbehälters)
- PL: Betriebsflüssigkeitspegel / Betriebsflüssigkeitsoberfläche (bei in der Figurenansicht nach links geneigtem Betriebsflüssigkeitsbehälter)
- PLA: Betriebsflüssigkeitspegel / Betriebsflüssigkeitsoberfläche außerhalb der Schottwand
- PR: Betriebsflüssigkeitspegel / Betriebsflüssigkeitsoberfläche (bei in der Figurenansicht nach links geneigtem Betriebsflüssigkeitsbehälter)

## Patentansprüche

1. Betriebsflüssigkeitsbehälter (10) für ein Kraftfahrzeug mit den folgenden Merkmalen:
- der Betriebsflüssigkeitsbehälter (10) weist eine Betankungsentlüftungseinrichtung (30) zum Entlüften eines Betriebsflüssigkeitsbehälterinnenraums (16) während eines Betankungsvorganges auf;
- der Betriebsflüssigkeitsbehälterinnenraum (16) steht mittels der Betankungsentlüftungseinrichtung (30) mit der Umgebung des Betriebsflüssigkeitsbehälters (10) zumindest mittelbar in Fluidverbindung, wenn eine Belüftungsöffnung (31) der Betankungsentlüftungseinrichtung (30) nicht verschlossen ist;
- in Einbaulage und horizontaler Ausrichtung des Betriebsflüssigkeitsbehälters (10) wird bei einem vorgegeben Nennvolumen von Betriebsflüssigkeit innerhalb des Betriebsflüssigkeitsbehälterinnenraums (16) die Belüftungsöffnung (31) der Betankungsentlüftungseinrichtung (30) bedingt durch den Betriebsflüssigkeitspegel im Betriebsflüssigkeitsbehälterinnenraum (16) verschlossen, so dass ein Gasaustausch zwischen dem Betriebsflüssigkeitsbehälterinnenraum (16) und der Umgebung des Betriebsflüssigkeitsbehälters (10) mittels der Betankungsentlüftungseinrichtung (30) unterbunden ist, wodurch ein Befüllstopp eines Befüllvorganges des Betriebsflüssigkeitsbehälters (10) initiierbar ist;
- der Betriebsflüssigkeitsbehälter (10) weist zumindest eine im Betriebsflüssigkeitsbehälterinnenraum (16) angeordnete Schottwand (21, 22) auf, die mit einer Innenfläche (13) einer Behälterdecke (12) des Betriebsflüssigkeitsbehälters (10) in Kontakt steht und sich in Richtung eines der Behälterdecke (12) gegenüberliegenden Behälterbodens (14) erstreckt;
- die Schottwand (21, 22) bildet zusammen mit der Behälterdecke (12) einen gasundurchlässigen Luftraum (18), der von einem Entlüftungsraum (17), in dem die Betankungsentlüftungseinrichtung (30) angeordnet ist, luftgetrennt ist, wenn ein Pegel der Betriebsflüssigkeit im Betriebsflüssigkeitsbehälterinnenraum (16) so hoch ist, dass eine dem Behälterboden (14) zugewandte Unterkante (23) der Schottwand (21, 22) in die sich im Betriebsflüssigkeitsbehälterinnenraum (16) befindliche Betriebsflüssigkeit eingetaucht
ist, wobei der Betriebsflüssigkeitsbehälter (10) durch folgende Merkmale gekennzeichnet ist: die Schottwand (21, 22) ist derart dimensioniert und positioniert, dass unabhängig von einer beliebig orientierten Schräglage des Betriebsflüssigkeitsbehälters (10) von bis zu 20° während eines Befüllvorganges bei einem durch den Betriebsflüssigkeitspegel initiierten Verschluss der Belüftungsöffnung (31) ein Füllvolumen der sich im Betriebsflüssigkeitsbehälterinnenraum (16) befindlichen Betriebsflüssigkeit zwischen 90% und 110% des Nennvolumens des Betriebsflüssigkeitsbehälters (10) beträgt.

2. Betriebsflüssigkeitsbehälter (10) nach Anspruch 1, wobei der Betriebsflüssigkeitsbehälter (10) in ein Kraftfahrzeug eingebaut ist, **dadurch gekennzeichnet, dass** die zumindest eine Schottwand (21, 22) derart dimensioniert und positioniert ist, dass unabhängig von einer Schräglage von bis zu 20° des Betriebsflüssigkeitsbehälters (10), die durch eine Neigung des Betriebsflüssigkeitsbehälters (10) um eine parallel zu einer Längserstreckungsrichtung des Kraftfahrzeugs, in dem der Betriebsflüssigkeitsbehälter (10) eingebaut ist, orientierten Neigungsachse bewirkt wird, dass während eines Befüllvorganges bei einem durch den Betriebsflüssigkeitspegel initiierten Verschluss der Belüftungsöffnung (31) das Füllvolumen der sich im Betriebsflüssigkeitsbehälterinnenraum (16) befindlichen Betriebsflüssigkeit zwischen 90% und 110% des Nennvolumens des Betriebsflüssigkeitsbehälters (10) beträgt.

3. Betriebsflüssigkeitsbehälter (10) nach Anspruch 1, **dadurch gekennzeichnet, dass** die zumindest eine Schottwand (21, 22) entlang ihrer Längserstreckung (26) zumindest eine Biegung (24) aufweist.

4. Betriebsflüssigkeitsbehälter (10) nach einem der Ansprüche 1 oder 3, **dadurch gekennzeichnet, dass** die zumindest eine Schottwand (21, 22) entlang ihrer Längserstreckung (26) eine Mehrzahl von Biegungen (24) aufweist, so dass die zumindest eine Schottwand (21, 22) in sich geschlossen ist.

5. Betriebsflüssigkeitsbehälter (10) nach einem der Ansprüche 1, 3 oder 4, **dadurch gekennzeichnet, dass** die zumindest eine Schottwand (21, 22) entlang ihrer Längserstreckung (26) eine unterschiedliche Tiefenerstreckung (25) aufweist, so dass die Unterkante (23) der zumindest einen Schottwand (21, 22) entlang der Längserstreckung (26) der Schottwand (21, 22) unterschiedliche Abstände zu einer horizontal durch die Belüftungsöffnung (31) verlaufende Ebene aufweist.

6. Betriebsflüssigkeitsbehälter (10) nach einem der Ansprüche 1 oder 3 bis 5, **dadurch gekennzeichnet, dass** der Betriebsflüssigkeitsbehälter (10) eine im Betriebsflüssigkeitsbehälterinnenraum (16) angeordnete Belüftungsleitung (40) aufweist, mittels der der Luftraum (18) mit dem Entlüftungsraum (17) fluidverbunden ist, wobei die Belüftungsleitung (40) durch die zumindest eine Schottwand (21, 22) hindurchgeführt ist oder unter der Schottwand (21, 22) verläuft.

7. Betriebsflüssigkeitsbehälter (10) nach einem der Ansprüche 1 oder 3 bis 6, **dadurch gekennzeichnet, dass** die zumindest eine Schottwand (21, 22) lediglich mit der Innenfläche (13) der Behälterdecke (12) luftdicht verbunden ist.

8. Betriebsflüssigkeitsbehälter (10) nach einem der Ansprüche 1 oder 3 bis 6, **dadurch gekennzeichnet, dass** die zumindest eine Schottwand (21, 22) mit zumindest einer Innenfläche einer Seitenwand (15) des Betriebsflüssigkeitsbehälters (10) luftdicht verbunden ist.

9. Betriebsflüssigkeitsbehälter (10) nach einem der Ansprüche 1 oder 3 bis 8, **gekennzeichnet durch** die folgenden Merkmale:
- der Betriebsflüssigkeitsbehälter (10) weist zumindest zwei im Betriebsflüssigkeitsbehälterinnenraum (16) angeordnete Schottwände (21, 22) auf, die mit der Innenfläche (13) der Behälterdecke (12) des Betriebsflüssigkeitsbehälters (10) in Kontakt stehen und sich in Richtung des Behälterbodens (14) erstrecken;
- die Schottwände (21, 22) bilden zusammen mit der Behälterdecke (12) zwei Lufträume, die voneinander und von dem Entlüftungsraum (17) luftgetrennt sind, wenn ein Pegel der Betriebsflüssigkeit im Betriebsflüssigkeitsbehälterinnenraum (16) so hoch ist, dass dem Behälterboden (14) zugewandte Unterkanten (23) der Schottwände (21, 22) in die sich im Betriebsflüssigkeitsbehälterinnenraum (16) befindliche Betriebsflüssigkeit eingetaucht sind; und
- die Schottwände (21, 22) sind derart dimensioniert und positioniert, dass unabhängig von einer beliebig orientierten Schräglage des Betriebsflüssigkeitsbehälters (10)von bis zu 20° während eines Befüllvorganges bei einem durch den Betriebsflüssigkeitspegel initiierten Verschluss der Belüftungsöffnung (31) ein Füllvolumen der sich im Betriebsflüssigkeitsbehälterinnenraum (16) befindlichen Betriebsflüssigkeit zwischen 90% und 110% des Nennvolumens des Betriebsflüssigkeitsbehälters (10) beträgt.

10. Betriebsflüssigkeitsbehälter (10) nach Anspruch 9, wobei der Betriebsflüssigkeitsbehälter (10) in ein Kraftfahrzeug eingebaut ist, **dadurch gekennzeichnet, dass** die zumindest zwei Schottwände (21, 22) derart dimensioniert und positioniert sind, dass unabhängig von einer Schräglage von bis zu 20° des Betriebsflüssigkeitsbehälters (10), die durch eine Neigung des Betriebsflüssigkeitsbehälters (10) um eine parallel zu einer Längserstreckungsrichtung des Kraftfahrzeugs, in dem der Betriebsflüssigkeitsbehälter (10) eingebaut ist, bewirkt wird, dass während eines Befüllvorganges bei einem durch den Betriebsflüssigkeitspegel initiierten Verschluss der Belüftungsöffnung (31) das Füllvolumen der sich im Betriebsflüssigkeitsbehälterinnenraum (16) befindlichen Betriebsflüssigkeit zwischen 90% und 110% des Nennvolumens des Betriebsflüssigkeitsbehälters (10) beträgt.

11. Betriebsflüssigkeitsbehälter (10) nach Anspruch 9, **dadurch gekennzeichnet, dass** die Schottwände (21, 22) unterschiedliche Tiefenerstreckungen (25; 25_1, 25_2) aufweisen, so dass eine erste Unterkante (23) einer ersten Schottwand (21, 22) einen anderen Abstand zu einer horizontal durch die Belüftungsöffnung (31) verlaufende Ebene aufweist als eine zweite Unterkante (23) einer zweiten Schottwand (21, 22).

12. Betriebsflüssigkeitsbehälter (10) nach Anspruch 11, **gekennzeichnet durch** die folgenden Merkmale:
- die erste Schottwand (21, 22) weist zur Betankungsentlüftungseinrichtung (30) einen ersten Abstand und eine erste Tiefenerstreckung (25_1) auf;
- die zweite Schottwand (21, 22) weist zur Betankungsentlüftungseinrichtung (30) einen zweiten Abstand und eine zweite Tiefenerstreckung (25_2) auf; und
- der erste Abstand ist kleiner als der zweite Abstand und die erste Tiefenerstreckung (25 1) ist kleiner als die zweite Tiefenerstreckung (25_2).

13. Betriebsflüssigkeitsbehälter (10) nach einem der Ansprüche 1 oder 3 bis 9 oder 11 bis 12, **dadurch gekennzeichnet, dass** die Betankungsentlüftungseinrichtung (30) ein Tauchrohr (30) aufweist, dessen Belüftungsöffnung (31) durch die sich im Betriebsflüssigkeitsbehälterinnenraum (16) befindliche Betriebsflüssigkeit verschlossen wird.

14. Betriebsflüssigkeitsbehälter (10) nach einem der Ansprüche 1 oder 3 bis 9 oder 11 bis 12, **dadurch gekennzeichnet, dass** die Betankungsentlüftungseinrichtung (30) ein Schwimmerventil aufweist, dessen Belüftungsöffnung (31) durch einen Ventilkörper verschlossen wird, wenn ein Volumen der sich im Betriebsflüssigkeitsbehälterinnenraum (16) befindliche Betriebsflüssigkeit dem Nennvolumen entspricht oder dieses übersteigt.

15. Betriebsflüssigkeitsbehälter (10) nach einem der Ansprüche 1 oder 3 bis 9 oder 11 bis 14, **dadurch gekennzeichnet, dass** die zumindest eine Schottwand (21, 22) mit einer Schwappschutzwand in direktem Kontakt steht.

16. Betriebsflüssigkeitsbehälter (10) nach Anspruch 15, **dadurch gekennzeichnet, dass** die Schwappschutzwand mit dem Behälterboden (14) und mit der zumindest einen Schottwand (21, 22) verbunden ist, so dass die zumindest eine Schottwand (21, 22) zusammen mit der Schwappschutzwand ein Stabilisierungselement bilden, das einer Verformung des Betriebsflüssigkeitsbehälters (10) entgegenwirkt.

## Claims

1. An operating fluid container (10) for a motor vehicle, having the following features:
- the operating fluid container (10) has a refueling venting device (30) for venting an operating fluid container interior (16) during a refueling operation;
- the operating fluid container interior (16) is at least indirectly fluidically connected to the surroundings of the operating fluid container (10) by means of the refueling venting device (30) when a vent (31) of the refueling venting device (30) is not closed;
- in the installation position and horizontal orientation of the operating fluid container (10), for a predefined nominal volume of operating fluid within the operating fluid container interior (16), the vent (31) of the refueling venting device (30) is closed as a result of the operating fluid level in the operating fluid container interior (16), so that gas exchange between the operating fluid container interior (16) and the surroundings of the operating fluid container (10) is prevented by the refueling venting device (30), as the result of which a filling stop of a filling operation of the operating fluid container (10) may be initiated,
- the operating fluid container (10) has at least one partition (21, 22) that is situated in the operating fluid container interior (16) and is in contact with an inner surface (13) of a container ceiling (12) of the operating fluid container (10), and extends in the direction of a container floor (14) opposite the container ceiling (12);
- the partition (21, 22) together with the container ceiling (12) forms a gas-impermeable air space (18) that is separated by air from a vent space (17) in which the refueling venting device (30) is situated, when a level of the operating fluid in the operating fluid container interior (16) is high enough that a lower edge (23) of the partition (21, 22) facing the container floor (14) is immersed in the operating fluid present in the operating fluid container interior (16);
wherein the operating fluid container (10) is **characterized by** the following features:
- the partition (21, 22) is dimensioned and positioned in such a way that, regardless of an arbitrarily oriented inclined position of the operating fluid container (10) of up to 20°, a filling volume of the operating fluid present in the operating fluid container interior (16) is between 90% and 110% of the nominal volume of the operating fluid container (10) when closing of the vent (31) is initiated by the operating fluid level during a filling operation.

2. The operating fluid container (10) according to Claim 1, wherein the operating fluid container (10) is installed in a motor vehicle, **characterized in that** the at least one partition (21, 22) is dimensioned and positioned in such a way that, regardless of an inclined position of the operating fluid container (10) of up to 20°, which is brought about by an inclination of the operating fluid container (10) about an inclination axis oriented in parallel to a direction of longitudinal extension of the motor vehicle in which the operating fluid container (10) is installed, the filling volume of the operating fluid present in the operating fluid container interior (16) is between 90% and 110% of the nominal volume of the operating fluid container (10) when closing of the vent (31) is initiated by the operating fluid level during a filling operation.

3. The operating fluid container (10) according to Claim 1, **characterized in that** the at least one partition (21, 22) has at least one bend (24) along its longitudinal extension (26).

4. The operating fluid container (10) according to one of Claims 1 or 3, **characterized in that** the at least one partition (21, 22) has a plurality of bends (24) along its longitudinal extension (26), so that the at least one partition (21, 22) is self-contained.

5. The operating fluid container (10) according to one of Claims 1, 3, or 4, **characterized in that** the at least one partition (21, 22) has a different depth extension (25) along its longitudinal extension (26), so that along the longitudinal extension (26) of the partition (21, 22), the lower edge (23) of the at least one partition (21, 22) has different distances from a plane extending horizontally through the vent (31).

6. The operating fluid container (10) according to one of Claims 1 or 3 to 5, **characterized in that** the operating fluid container (10) has a vent line (40) situated in the operating fluid container interior (16), by means of which the air space (18) is fluidically connected to the vent space (17), wherein the vent line (40) is guided through the at least one partition (21, 22) or extends beneath the partition (21, 22).

7. The operating fluid container (10) according to one of Claims 1 or 3 to 6, **characterized in that** the at least one partition (21, 22) has an airtight connection only to the inner surface (13) of the container ceiling (12).

8. The operating fluid container (10) according to one of Claims 1 or 3 to 6, **characterized in that** the at least one partition (21, 22) has an airtight connection to at least one inner surface of a side wall (15) of the operating fluid container (10).

9. The operating fluid container (10) according to one of Claims 1 or 3 to 8, **characterized by** the following features:
- the operating fluid container (10) has at least two partitions (21, 22) situated in the operating fluid container interior (16), which are in contact with the inner surface (13) of the container ceiling (12) of the operating fluid container (10) and extend in the direction of the container floor (14);
- the partitions (21, 22) together with the container ceiling (12) form two air spaces that are separated from one another and from the vent space (17) by air when a level of the operating fluid in the operating fluid container interior (16) is high enough that lower edges (23) of the partitions (21, 22) facing the container floor (14) are immersed in the operating fluid present in the operating fluid container interior (16); and
- the partitions (21, 22) are dimensioned and positioned in such a way that, regardless of an arbitrarily oriented inclined position of the operating fluid container (10) of up to 20°, a filling volume of the operating fluid present in the operating fluid container interior (16) is between 90% and 110% of the nominal volume of the operating fluid container (10) when closing of the vent (31) is initiated by the operating fluid level during a filling operation.

10. The operating fluid container (10) according to Claim 9, wherein the operating fluid container (10) is installed in a motor vehicle, **characterized in that** the at least two partitions (21, 22) are dimensioned and positioned in such a way that, regardless of an inclined position of the operating fluid container (10) of up to 20°, which is brought about by an inclination of the operating fluid container (10) about an inclination axis oriented in parallel to a direction of longitudinal extension of the motor vehicle in which the operating fluid container (10) is installed, the filling volume of the operating fluid present in the operating fluid container interior (16) is between 90% and 110% of the nominal volume of the operating fluid container (10) when closing of the vent (31) is initiated by the operating fluid level during a filling operation.

11. The operating fluid container (10) according to Claim 9, **characterized in that** the partitions (21, 22) have different depth extensions (25; 25_1, 25_2), so that a first lower edge (23) of a first partition (21, 22) has a different distance from a plane extending horizontally through the vent (31) than a second lower edge (23) of a second partition (21, 22).

12. The operating fluid container (10) according to Claim 11, **characterized by** the following features:
- the first partition (21, 22) has a first distance from the refueling venting device (30) and a first depth extension (25_1);
- the second partition (21, 22) has a second distance from the refueling venting device (30) and a second depth extension (25_2); and
- the first distance is smaller than the second distance, and the first depth extension (25_1) is smaller than the second depth extension (25_2).

13. The operating fluid container (10) according to one of Claims 1 or 3 to 9 or 11 to 12, **characterized in that** the refueling venting device (30) has an immersion tube (30) whose vent (31) is closed by the operating fluid present in the operating fluid container interior (16).

14. The operating fluid container (10) according to one of Claims 1 or 3 to 9 or 11 to 12, **characterized in that** the refueling venting device (30) has a float valve whose vent (31) is closed by a valve body when a volume of the operating fluid present in the operating fluid container interior (16) corresponds to or exceeds the nominal volume.

15. The operating fluid container (10) according to one of Claims 1 or 3 to 9 or 11 to 14, **characterized in that** the at least one partition (21, 22) is in direct contact with a splash protection wall.

16. The operating fluid container (10) according to Claim 15, **characterized in that** the splash protection wall is connected to the container floor (14) and to the at least one partition (21, 22), so that the at least one partition (21, 22) together with the splash protection wall forms a stabilizing element that counteracts deformation of the operating fluid container (10).

## Revendications

1. Réservoir de liquide de fonctionnement (10) destiné à un véhicule à moteur, présentant les caractéristiques suivantes :
- le réservoir de liquide de fonctionnement (10) présente un dispositif de désaération de ravitaillement (30) permettant de désaérer un espace intérieur de réservoir de liquide de fonctionnement (16) pendant un processus de ravitaillement ;
- l'espace intérieur de réservoir de liquide de fonctionnement (16) est au moins indirectement en liaison fluidique avec l'environnement du réservoir de liquide de fonctionnement (10) au moyen du dispositif de désaération de ravitaillement (30) si une ouverture d'aération (31) du dispositif de désaération de ravitaillement (30) n'est pas fermée ;
- dans la position d'installation et l'orientation horizontale du réservoir de liquide de fonctionnement (10), lors d'un volume nominal spécifié du liquide de fonctionnement dans l'espace intérieur de réservoir de liquide de fonctionnement (16), l'ouverture d'aération (31) du dispositif de désaération de ravitaillement (30) est fermée en raison du niveau de liquide de fonctionnement dans l'espace intérieur de réservoir de liquide de fonctionnement (16), de sorte qu'un échange de gaz entre l'espace intérieur de réservoir de liquide de fonctionnement (16) et l'environnement du réservoir de liquide de fonctionnement (10) est empêché par le dispositif de désaération de ravitaillement (30), si bien qu'un arrêt de remplissage d'un processus de remplissage du réservoir de liquide de fonctionnement (10) peut être initié ;
- le réservoir de liquide de fonctionnement (10) présente au moins une cloison (21, 22) disposée dans l'espace intérieur de réservoir de liquide de fonctionnement (16), laquelle est en contact avec une surface intérieure (13) d'un toit de réservoir (12) du réservoir de liquide de fonctionnement (10) et s'étend dans la direction d'un fond de réservoir (14) opposé au toit de réservoir (12) ;
- la cloison (21, 22) forme, conjointement avec le toit de réservoir (12), un espace d'air imperméable aux gaz (18) qui est séparé d'un espace de désaération (17) dans lequel est disposé le dispositif de désaération de ravitaillement (30) lorsqu'un niveau du liquide de fonctionnement dans l'espace intérieur de réservoir de liquide de fonctionnement (16) est si haut qu'un bord inférieur (23) de la cloison (21, 22) faisant face au fond de réservoir (14) est immergé dans le liquide de fonctionnement se trouvant dans l'espace intérieur de réservoir de liquide de fonctionnement (16), le réservoir de liquide de fonctionnement (10) étant **caractérisé par** les caractéristiques suivantes :
la cloison (21, 22) est dimensionnée et positionnée de telle sorte que quelle que soit la position inclinée, orientée de manière quelconque, du réservoir de liquide de fonctionnement (10) jusqu'à 20°, lors d'une fermeture de l'ouverture d'aération (31) initiée par le niveau de liquide de fonctionnement pendant un processus de remplissage, un volume de remplissage du liquide de fonctionnement se trouvant dans l'espace intérieur de réservoir de liquide de fonctionnement (16) comprend entre 90 % et 110 % du volume nominal du réservoir de liquide de fonctionnement (10).

2. Réservoir de liquide de fonctionnement (10) selon la revendication 1, dans lequel le réservoir de liquide de fonctionnement (10) est installé dans un véhicule à moteur, **caractérisé en ce que** l'au moins une cloison (21, 22) est dimensionnée et positionnée de telle sorte que quelle que soit la position inclinée du réservoir de liquide de fonctionnement (10) jusqu'à 20°, laquelle position inclinée est provoquée par une inclinaison du réservoir de liquide de fonctionnement (10) autour d'un axe d'inclinaison orienté parallèlement à une direction d'étendue longitudinale du véhicule à moteur dans lequel le réservoir de liquide de fonctionnement (10) est installé, lors d'une fermeture de l'ouverture d'aération (31) initiée par le niveau de liquide de fonctionnement pendant un processus de remplissage, le volume de remplissage du liquide de fonctionnement se trouvant dans l'espace intérieur de réservoir de liquide de fonctionnement (16) comprend entre 90 % et 110 % du volume nominal du réservoir de liquide de fonctionnement (10).

3. Réservoir de liquide de fonctionnement (10) selon la revendication 1, **caractérisé en ce que** l'au moins une cloison (21, 22) présente au moins une courbure (24) le long de son étendue longitudinale (26).

4. Réservoir de liquide de fonctionnement (10) selon l'une des revendications 1 ou 3, **caractérisé en ce que** l'au moins une cloison (21, 22) présente une pluralité de courbures (24) le long de son étendue longitudinale (26), de sorte que l'au moins une cloison (21, 22) est fermée sur elle-même.

5. Réservoir de liquide de fonctionnement (10) selon l'une des revendications 1, 3 ou 4, **caractérisé en ce que** l'au moins une cloison (21, 22) présente une profondeur d'étendue (25) différente le long de son étendue longitudinale (26), de sorte que le bord inférieur (23) de l'au moins une cloison (21, 22) le long de l'étendue longitudinale (26) de la cloison (21, 22) présente des distances différentes d'un plan parcourant l'ouverture d'aération (31) de façon horizontale.

6. Réservoir de liquide de fonctionnement (10) selon l'une des revendications 1 ou 3 à 5, **caractérisé en ce que** le réservoir de liquide de fonctionnement (10) présente une conduite d'aération (40) disposée dans l'espace intérieur de réservoir de liquide de fonctionnement (16), au moyen de laquelle l'espace d'air (18) est relié de manière fluidique à l'espace de désaération (17), la conduite d'aération (40) passant à travers l'au moins une cloison (21, 22) ou en-dessous de la cloison (21, 22).

7. Réservoir de liquide de fonctionnement (10) selon l'une des revendications 1 ou 3 à 6, **caractérisé en ce que** l'au moins une cloison (21, 22) est uniquement reliée, de manière étanche à l'air, à la surface intérieure (13) du toit de réservoir (12).

8. Réservoir de liquide de fonctionnement (10) selon l'une des revendications 1 ou 3 à 6, **caractérisé en ce que** l'au moins une cloison (21, 22) est reliée de manière étanche à l'air à au moins une surface intérieure d'une paroi latérale (15) du réservoir de liquide de fonctionnement (10).

9. Système de réservoir de liquide de fonctionnement (10) selon l'une des revendications 1 ou 3 à 8, **caractérisé par** les caractéristiques suivantes :
- le réservoir de liquide de fonctionnement (10) présente au moins deux cloisons (21, 22) disposées dans l'espace intérieur de réservoir de liquide de fonctionnement (16), lesquelles sont en contact avec la surface intérieure (13) du toit de réservoir (12) du réservoir de liquide de fonctionnement (10) et s'étendent dans la direction du fond de réservoir (14) ;
- les cloisons (21, 22) forment, conjointement avec le toit de réservoir (12), deux espaces d'air séparés, de manière étanche à l'air, l'un de l'autre et de l'espace de désaération (17) lorsqu'un niveau du liquide de fonctionnement dans l'espace intérieur de réservoir de liquide de fonctionnement (16) est si haut que des bords inférieurs (23) des cloisons (21, 22) faisant face au fond de réservoir (14) sont immergés dans le liquide de fonctionnement se trouvant dans l'espace intérieur de réservoir de liquide de fonctionnement (16) ; et
- les cloisons (21, 22) sont dimensionnées et positionnées de telle sorte que quelle que soit la position inclinée, orientée de manière quelconque, du réservoir de liquide de fonctionnement (10) jusqu'à 20°, lors d'une fermeture de l'ouverture d'aération (31) initiée par le niveau de liquide de fonctionnement pendant un processus de remplissage, un volume de remplissage du liquide de fonctionnement se trouvant dans l'espace intérieur de réservoir de liquide de fonctionnement (16) comprend entre 90 % et 110 % du volume nominal du réservoir de liquide de fonctionnement (10).

10. Réservoir de liquide de fonctionnement (10) selon la revendication 9, dans lequel le réservoir de liquide de fonctionnement (10) est installé dans un véhicule à moteur, **caractérisé en ce que** les au moins deux cloisons (21, 22) sont dimensionnées et positionnées de telle sorte que quelle que soit une position inclinée jusqu'à 20° du réservoir de liquide de fonctionnement (10), laquelle est provoquée par une inclinaison du réservoir de liquide de fonctionnement (10) autour d'un axe d'inclinaison orienté parallèlement à une direction d'étendue longitudinale du véhicule à moteur dans lequel le réservoir de liquide de fonctionnement (10) est installé, lors d'une fermeture de l'ouverture d'aération (31) initiée par le niveau de liquide de fonctionnement pendant un processus de remplissage, le volume de remplissage du liquide de fonctionnement se trouvant dans l'espace intérieur de réservoir de liquide de fonctionnement (16) comprend entre 90 % et 110 % du volume nominal du réservoir de liquide de fonctionnement (10).

11. Réservoir de liquide de fonctionnement (10) selon la revendication 9, **caractérisé en ce que** les cloisons (21, 22) présentent des étendues de profondeurs différentes (25; 25_1, 25_2), de sorte qu'un premier bord inférieur (23) d'une première cloison (21, 22) présente une distance différente d'un plan parcourant l'ouverture d'aération (31) de façon horizontale par rapport à un second bord inférieur (23) d'une seconde cloison (21, 22).

12. Réservoir de liquide de fonctionnement (10) selon la revendication 11, **caractérisé par** les caractéristiques suivantes :
- la première cloison (21, 22) présente, par rapport au dispositif de désaération de ravitaillement (30), une première distance et une première étendue de profondeur (25_1) ;
- la seconde cloison (21, 22) présente, par rapport au dispositif de désaération de ravitaillement (30), une seconde distance et une seconde étendue de profondeur (25_2) ; et
- la première distance est inférieure à la seconde distance et la première étendue de profondeur (25_1) est inférieure à la seconde étendue de profondeur (25_2).

13. Réservoir de liquide de fonctionnement (10) selon l'une des revendications 1 ou 3 à 9 ou 11 à 12, **caractérisé en ce que** le dispositif de désaération de ravitaillement (30) présente un tube plongeur (30) dont l'ouverture d'aération (31) est fermée par le liquide de fonctionnement se trouvant dans l'espace intérieur de réservoir de liquide de fonctionnement (16).

14. Réservoir de liquide de fonctionnement (10) selon l'une des revendications 1 ou 3 à 9 ou 11 à 12, **caractérisé en ce que** le dispositif de désaération de ravitaillement (30) présente une vanne à flotteur dont l'ouverture d'aération (31) est fermée par un corps de vanne lorsqu'un volume du liquide de fonctionnement se trouvant dans l'espace intérieur de réservoir de liquide de fonctionnement (16) correspond ou dépasse le volume nominal.

15. Réservoir de liquide de fonctionnement (10) selon l'une des revendications 1 ou 3 à 9 ou 11 à 14, **caractérisé en ce que** l'au moins une cloison (21, 22) est en contact direct avec une paroi de protection contre les débordements.

16. Réservoir de liquide de fonctionnement (10) selon la revendication 15, **caractérisé en ce que** la paroi de protection contre les débordements est reliée au fond de réservoir (14) et à l'au moins une cloison (21, 22) de sorte que l'au moins une cloison (21, 22) forme, conjointement avec la paroi de protection contre les débordements, un élément de stabilisation qui s'oppose à une déformation du réservoir de liquide de fonctionnement (10).
